# EUROPEAN PATENT SPECIFICATION

(11) **EP 4 451 494 B1**
(45) Date of publication and mention of the grant of the patent: **26.08.2026**
(21) Application number: 22929384.0
(22) Date of filing: 04.03.2022
(51) Int. Cl.: G06F 1/08, G06F 1/30, H02H 9/02, G06F 1/324, G05F 1/59

(54) **POWER SUPPLY CIRCUIT AND FREQUENCY ADJUSTMENT METHOD**
STROMVERSORGUNGSSCHALTUNG UND FREQUENZEINSTELLUNGSVERFAHREN
CIRCUIT D'ALIMENTATION ÉLECTRIQUE ET PROCÉDÉ D'AJUSTEMENT DE FRÉQUENCE

(43) Date of publication of application: 23.10.2024
(73) Proprietor: Huawei Technologies Co., Ltd., Shenzhen, Guangdong 518129 (CN)
(72) Inventor: FAN, Tuanbao, Shenzhen, Guangdong 518129 (CN); ROSEN, Eitan, Shenzhen, Guangdong 518129 (CN); SUN, Ningbo, Shenzhen, Guangdong 518129 (CN); WANG, Yang, Shenzhen, Guangdong 518129 (CN); SHI, Xiaoshan, Shenzhen, Guangdong 518129 (CN); JIANG, Mingfeng, Shenzhen, Guangdong 518129 (CN); LIU, Yu, Shenzhen, Guangdong 518129 (CN); HU, Zhangrong, Shenzhen, Guangdong 518129 (CN)
(74) Representative: Goddar, Heinz J.
(86) International application number: PCT/CN2022/079366
(87) International publication number: WO 2023/164941

(56) References cited:
- WO-A1-2020/176166
- WO-A1-2022/025861
- CN-A- 110 100 221
- CN-A- 112 068 630
- CN-U- 207 424 805
- CN-U- 211 830 203
- US-A1- 2007 257 713
- US-A1- 2012 014 081
- US-A1- 2021 294 373

## Description

### TECHNICAL FIELD

Embodiments of this application relate to the circuit field, and in particular, to a power supply circuit and a frequency adjustment method.

### BACKGROUND

As performance of a processor is increasingly improved, a running frequency of the processor is increasingly high, and power consumption is also increasingly high. For a processor of a mobile terminal, an increase in power consumption further causes a shortened battery life, a heat dissipation problem, and other problems.

To reduce the power consumption of the processor, when power is supplied to the processor, an operating voltage required by the processor at a current operating frequency is first determined, and then a power supply is controlled to supply a corresponding output voltage.

However, a service has different requirements for the operating frequency of the processor in different time periods. Even if the processor operates at a same fixed frequency, because a running status of the processor keeps changing, a power supply current drawn by the processor from the power supply also keeps changing. When the processor changes from a low frequency to a high frequency, or when a heavily loaded module in the processor suddenly runs, a large current is instantaneously extracted from the power supply. In this case, the power supply cannot rapidly make an adjustment to keep the operating voltage of the processor constant. This causes a power supply dip. When a voltage after the power supply dip is lower than a minimum voltage required by the processor at a current frequency, the processor may crash or have a power failure. Conventionally, a method for avoiding this problem is to increase a power supply voltage of the processor. However, the power consumption is inevitably increased due to the voltage increase.
US 2007/257713 A1 discloses a frequency regulator for varying a clock frequency of a power-supplied consumer operated in a clocked manner, wherein the frequency regulator is implemented to perform an overall variation of the clock frequency from an actual frequency to a set frequency, such that the overall variation is obtained by a plurality of clock changes, each with a different amount of change, wherein each of the respective amounts of change depends on a power change caused by the associated clock frequency change.
US 2021/294373 A1 discloses an all-digital closed-loop fine-grained control of voltage and frequency for running conditions of a compute machine such as graphic processor unit (GPU), central processing unit (CPU), or any other processing unit. The scheme optimizes the voltage margin and frequency on the fly according to desired programmable performance metrics. A mitigation response to droops is naturally built into the system and is equal to the cause rather than being excessive. The scheme is scalable and can be instantiated in different clusters for best results. WO 2022/025861 A1 discloses systems and techniques for adaptive frequency control in integrated circuits. In response to operating conditions that permit a lower frequency of a clock signal, the described systems and techniques dynamically reduce the clock frequency without adjusting the frequency of an input clock signal. The clock frequency is decreased by gating a fraction of the input clock signal and stretching the ungated cycles by an offset amount. By dynamically adjusting the clock frequency in this manner, an integrated circuit can change its clock frequency more quickly and maintain the supply voltage closer to a lower voltage limit to reduce power consumption and allow safer operations.

### SUMMARY

The invention provides a power supply circuit of claim 1, to improve running stability of a processor without increasing power consumption. The invention further provides a corresponding frequency adjustment method of claim 7. Further embodiments are disclosed in the dependent claims. Embodiment of the description not covered by the claims shall be considered as examples helpful for understanding the invention.

A first aspect of this application provides a power supply circuit, where the power supply circuit includes a power supply module, a processing module, and a clock generator module. The power supply module is configured to supply power to the processing module at a variable operating voltage. The clock generator module is configured to: obtain the operating voltage, generate, based on the operating voltage, a clock signal with a variable operating frequency, and provide the clock signal for the processing module. The processing module is configured to run based on the operating voltage and the operating frequency.

In this application, the power supply module is a DC-DC power supply, and is specifically a buck power supply. The processing module is a processor, a processor core, a chip, or the like. The clock generator module may be a tunable ring clock generator (TRCG), or may be another clock generator that can implement this function.

The power supply module in this application is connected to the processing module. The power supply module provides an output voltage. After the output voltage is transmitted to the processing module, an operating voltage is obtained after a loss occurs on the output voltage, and the processing module runs based on the operating voltage. The power supply module is further connected to the clock generator module, and the power supply module supplies power to the clock generator module. The clock generator module is connected to the processing module. The clock generator module obtains the operating voltage of the processing module, and sends the clock signal to the processing module. The clock generator module specifically generates, based on an instantaneous voltage value of the operating voltage, the clock signal of the operating frequency corresponding to the instantaneous voltage value. Therefore, the voltage input to the processing module by the power supply module and the clock signal input to the processing module by the clock generator module change rapidly at the same time. In other words, the operating frequency of the processing module changes rapidly with the operating voltage.

In the first aspect, the operating voltage of the processing module is obtained, and the clock signal that indicates the operating frequency of the processing module is generated based on the operating voltage, so that the processing module runs at an operating frequency corresponding to a current operating voltage. Even if the operating voltage fluctuates, the processing module does not run abnormally. This improves running reliability and running stability of the processor without increasing power consumption.

In a possible implementation of the first aspect, the clock generator module is specifically configured to generate, based on the operating voltage, the clock signal that meets a preset frequency-voltage mapping relationship, where the preset frequency-voltage mapping relationship is determined based on the processing module.

In this possible implementation, after obtaining the operating voltage, the clock generator module determines, based on the FV curve, a clock frequency corresponding to the operating voltage, or determines, based on the FV curve, a clock frequency not higher than a clock frequency corresponding to the operating voltage, and outputs the clock frequency to the processing module. In this way, the processing module can always keep in an operating condition that meets the FV curve, that is, run when the clock frequency is not higher than an operating frequency determined by the FV curve, and the processing module does not crash when running in the operating condition that meets the FV curve. This can ensure normal and stable running, and further improves running reliability and running stability of the processing module.

According to the first aspect, the power supply circuit further includes: a clock measurement module, connected to the clock generator module, where the clock measurement module is configured to determine an average frequency of variable operating frequencies within a preset time period; and a voltage regulator module, configured to: receive the average frequency, and adjust, based on the average frequency and a target operating frequency, the operating voltage used by the power supply module to supply power, where the target operating frequency is preset based on a running service of the processing module.

In this possible implementation, if it is ensured that the processing module runs in the operating condition that meets the FV curve of the processing module, the output voltage of the power supply module is further adjusted, to ensure that an average operating frequency of the processing module approaches a target operating frequency of a current running service. This improves user experience.

The power supply module includes a direct current power supply unit and a digital voltage stabilizer unit. The direct current power supply unit is configured to supply power to the digital voltage stabilizer unit. The digital voltage stabilizer unit is configured to: supply power to the processing module at the operating voltage, and when a power supply dip occurs, increase the operating voltage to a voltage value before the power supply dip. The voltage regulator module is specifically configured to adjust power supply of the digital voltage stabilizer unit and/or the direct current power supply unit.

When the power supply dip occurs, the operating voltage may be rapidly and automatically adjusted, and a voltage before the dip is rapidly restored. This improves a transient response capability and ensures normal operation of the clock generator module when a requirement of the processing module is met. This ensures normal voltage regulation of the voltage regulator module, and further improves running reliability and running stability of the processing module.

In a possible implementation of the first aspect, the digital voltage stabilizer unit is further configured to send an alarm signal to the voltage regulator module when the power supply dip occurs, and the voltage regulator module is further configured to increase, based on the alarm signal, a voltage at which the direct current power supply unit supplies power to the digital voltage stabilizer unit.

In this possible implementation, an alarm prompt is generated when the power supply dips excessively, so that the voltage adjustment module reserves an additional voltage. This ensures normal operation of the processing module, and further improves running reliability and running stability of the processing module.

In a possible implementation of the first aspect, there are N processing modules, N clock generator modules, N clock measurement modules, and one or N voltage regulator modules, the power supply module includes one direct current power supply unit and N digital voltage stabilizer units, and the direct current power supply unit is configured to supply power to the N digital voltage stabilizer units, where N is a positive integer greater than 1.

In this possible implementation, when a plurality of processing modules share one power supply module, and each processing module independently performs voltage-based frequency conversion, the voltage regulator module controls the power supply module to select an output voltage with a highest requirement for outputting. This avoids a control conflict and ensures normal operation of the plurality of processing modules.

In a possible implementation of the first aspect, the digital voltage stabilizer unit and the processing module corresponding to the digital voltage stabilizer unit are integrated into a chip.

In this possible implementation, the digital voltage stabilizer unit is located at a near end of the processing module. When the power supply dip occurs, a transient reaction of the digital voltage stabilizer unit can be improved, the operating voltage can be adjusted automatically and more rapidly, and a voltage before the dip is restored. This further ensures normal operation of the clock generator module, ensures normal voltage regulation of the voltage regulator module, and further improves running reliability and running stability of the processing module.

In a possible implementation of the first aspect, the clock generator module is integrated with the processing module.

In this possible implementation, the clock generator module is integrated with the processing module. In this way, the processing module and the clock generator module can implement fast data exchange. This further ensures that an output following speed of the clock generator module reaches a nanosecond level.

A second aspect of this application provides a frequency adjustment method of claim 7, where the frequency adjustment method is applied to a power supply circuit, the power supply circuit includes a power supply module and a processing module, the power supply module is configured to supply power to the processing module at a variable operating voltage, and the method includes: obtaining the operating voltage; generating, based on the operating voltage, a clock signal with a variable operating frequency; and providing the clock signal for the processing module, where the processing module is configured to run based on the operating voltage and the operating frequency.

In a possible implementation of the second aspect, the foregoing step of generating, based on the operating voltage, a clock signal with a variable operating frequency includes: generating, based on the operating voltage, the clock signal that meets a preset frequency-voltage mapping relationship, where the preset frequency-voltage mapping relationship is determined based on the processing module.

According to the second aspect, the method further includes: determining an average frequency of variable operating frequencies within a preset time period; and adjusting, based on the average frequency and a target operating frequency, the operating voltage used by the power supply module to supply power, where the target operating frequency is preset based on a running service of the processing module.

In a possible implementation of the second aspect, the power supply module includes a direct current power supply unit and a digital voltage stabilizer unit, the direct current power supply unit is configured to supply power to the digital voltage stabilizer unit, the digital voltage stabilizer unit is configured to: supply power to the processing module at the operating voltage, and when a power supply dip occurs, increase the operating voltage to a voltage value before the power supply dip.

In a possible implementation of the second aspect, the digital voltage stabilizer unit is further configured to send an alarm signal when the power supply dip occurs, and the method further includes: increasing, based on the alarm signal, a voltage at which the direct current power supply unit supplies power to the digital voltage stabilizer unit.

In a possible implementation of the second aspect, there are N processing modules, the power supply module includes one direct current power supply unit and N digital voltage stabilizer units, and the direct current power supply unit is configured to supply power to the N digital voltage stabilizer units, where N is a positive integer greater than 1.

In a possible implementation of the second aspect, the digital voltage stabilizer unit and the processing module corresponding to the digital voltage stabilizer unit are integrated into a chip.

The frequency adjustment method provided in the second aspect of this application is applied to the power supply circuit according to any one of the first aspect or the possible implementations of the first aspect, and has same beneficial effects as the power supply circuit.

In embodiments of this application, the operating voltage of the processing module is obtained, and the clock signal that indicates the operating frequency of the processing module is generated based on the operating voltage, so that the processing module runs at an operating frequency corresponding to a current operating voltage. Even if the operating voltage fluctuates, the processing module does not run abnormally. This improves running reliability and running stability of the processor without increasing power consumption.

### BRIEF DESCRIPTION OF DRAWINGS

FIG. 1 is a diagram of an architecture of a mobile terminal according to an embodiment of this application;
FIG. 2 is a diagram in which an operating frequency, required by a service, of a processor changes with time according to an embodiment of this application;
FIG. 3 is a diagram of an embodiment of a power supply circuit according to an embodiment of this application;
FIG. 4 is a diagram in which a clock frequency output by a clock generator fluctuates with an operating voltage according to an embodiment of this application;
FIG. 5 is a diagram of an embodiment of a clock generator module according to an embodiment of this application;
FIG. 6 is a diagram of an FV curve according to an embodiment of this application;
FIG. 7 is a diagram of another embodiment of a power supply circuit according to an embodiment of this application;
FIG. 8 is a diagram of another embodiment of a power supply circuit according to an embodiment of this application;
FIG. 9 is a diagram of another embodiment of a power supply circuit according to an embodiment of this application;
FIG. 10 is a diagram of an embodiment of a digital voltage stabilizer unit according to an embodiment of this application;
FIG. 11 is a diagram of an automatic voltage regulation range of a digital voltage stabilizer unit according to an embodiment of this application;
FIG. 12 is a diagram of another embodiment of a power supply circuit according to an embodiment of this application;
FIG. 13 is a diagram of technical effect of a power supply circuit according to an embodiment of this application;
FIG. 14 is a diagram of another embodiment of a power supply circuit according to an embodiment of this application;
FIG. 15 is a diagram of an embodiment of a frequency adjustment method according to an embodiment of this application;
FIG. 16 is a diagram of another embodiment of a frequency adjustment method according to an embodiment of this application; and
FIG. 17 is a diagram of another embodiment of a frequency adjustment method according to an embodiment of this application.

### DESCRIPTION OF EMBODIMENTS

The following describes embodiments of this application with reference to the accompanying drawings. It is clear that the described embodiments are merely some rather than all of embodiments of this application. A person of ordinary skill in the art may learn that with development of technologies and emergence of a new scenario, the technical solutions provided in embodiments of this application are also applicable to a similar technical problem.

In the specification, claims, and the accompanying drawings of this application, the terms "first", "second", and the like are intended to distinguish similar objects but do not necessarily indicate a specific order or sequence. It should be understood that the data termed in such a way are interchangeable in proper circumstances so that embodiments described herein can be implemented in other orders than the order illustrated or described herein. In addition, the terms "include" and "contain" and any other variants mean to cover the non-exclusive inclusion. For example, a process, method, system, product, or device that includes a series of steps or units is not necessarily limited to those expressly listed steps or units, but may include other steps or units not expressly listed or inherent to such a process, method, product, or device.

Embodiments of this application provide a power supply circuit, to improve running stability of a processor without increasing power consumption. Embodiments of this application further provide a corresponding frequency adjustment method. Details are separately described in the following.

The following explains and describes some terms and concepts in embodiments of this application.

### (1) DC-DC power supply

The DC-DC power supply is a power supply unit that can be directly mounted on a printed circuit board (PCB), and is characterized by supplying power to an application-specific integrated circuit (ASIC), a digital signal processor (DSP), a microprocessor, a memory, a field programmable gate array (FPGA), and another digital or analog load.

### (2) Buck power supply

The buck power supply is a type of the DC-DC power supply, and is specifically a step-down switching power supply.

### (3) Power supply dip

The power supply dip means a voltage dip of a power supply. The voltage dip means a phenomenon that the amplitude of a voltage suddenly deviates from a normal operating range at a specific moment and restores to a normal level after a short period of time, and may specifically mean that a valid value of a power supply voltage rapidly decreases to 90% to 10% of a rated value. The power supply dip is more likely to occur when power integrity (PI) is poor.

The following describes application scenarios of embodiments of this application by using examples.

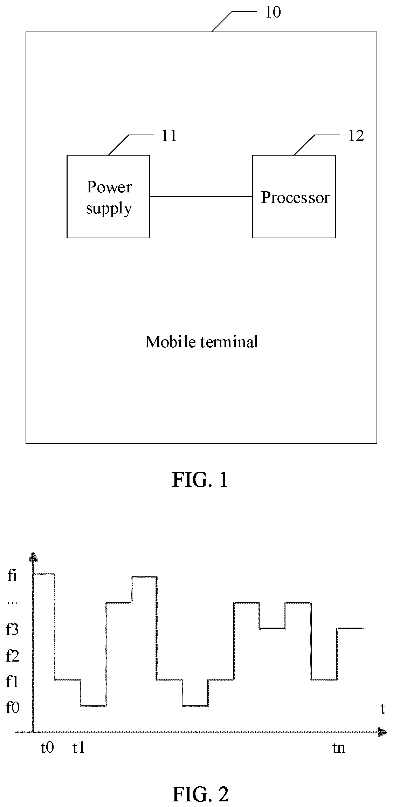

As shown in FIG. 1, in a mobile terminal 10, a power supply 11 of the mobile terminal 10 supplies power to a processor 12. A power supply path for supplying power includes a PCB, power supply cabling, a chip package, and a power supply cabling design in a chip (die). With improvement of a board level and chip integration, due to parasitic inductance and path impedance, it is difficult to ensure PI of the power supply path.

As shown in FIG. 2, when the mobile terminal runs different services or is in different service scenarios, an operating frequency, required by a service, of a processor also keeps changing. From moments *t*₀ to *tₙ*, the operating frequency, required by the service, of the processor fluctuates back and forth within a range from *f*₀ to *fᵢ*. In this case, a current extracted by the processor from the power supply also fluctuates continuously. A larger extracted current indicates a larger loss on the power supply path. When the extracted current fluctuates instantaneously, the power supply cannot rapidly make an adjustment to keep an operating voltage of the processor constant. This causes a power supply dip, an abnormal power failure, or another problem. When a power supply voltage dips to a specific voltage value, the processor cannot operate.

The following describes the power supply circuit provided in embodiments of this application by using examples with reference to four embodiments.

### Embodiment 1

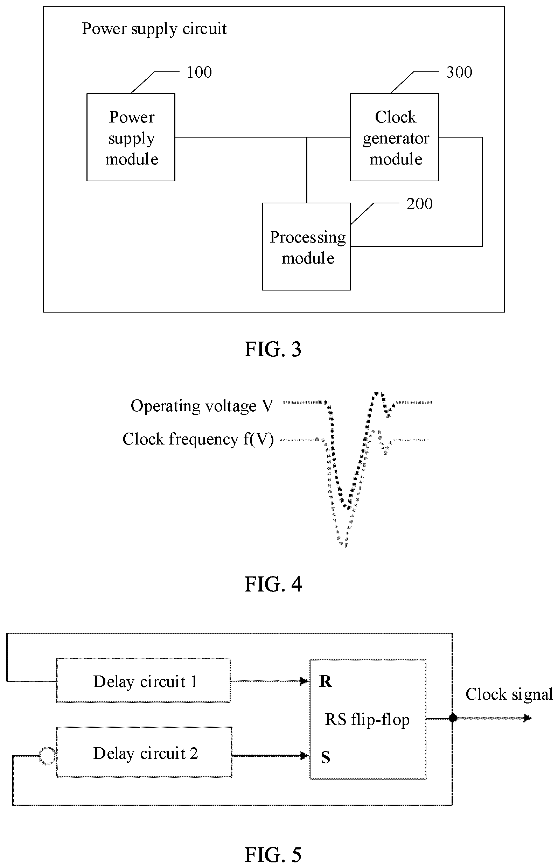

As shown in FIG. 3, an embodiment of the power supply circuit provided in embodiments of this application includes a power supply module 100, a processing module 200, and a clock generator module 300.

Specifically, the power supply module 100 is configured to supply power to the processing module 200 at a variable operating voltage. The clock generator module 300 is configured to: obtain the operating voltage, generate, based on the operating voltage, a clock signal with a variable operating frequency, and provide the clock signal for the processing module 200. The clock signal indicates an operating frequency of the processing module 200. The processing module 200 is configured to run based on the variable operating voltage and the variable operating frequency.

Optionally, the power supply module 100 is a DC-DC power supply, and is specifically a buck power supply. The processing module 200 is a processor, a processor core, a chip, or the like. The clock generator module 300 may be a tunable ring clock generator (TRCG), or may be another clock generator that can implement this function. This is not limited in this embodiment of this application.

In the power supply circuit, the power supply module 100 is connected to the processing module 200. The power supply module 100 provides an output voltage. After the output voltage is transmitted to the processing module 200, an operating voltage is obtained after a loss occurs on the output voltage, and the processing module 200 runs based on the operating voltage. The power supply module 100 is further connected to the clock generator module 300, and the power supply module 100 supplies power to the clock generator module 300. The clock generator module 300 is connected to the processing module 200. The clock generator module 300 obtains the operating voltage of the processing module 200, and sends the clock signal to the processing module 200. The clock generator module 300 specifically generates, based on an instantaneous voltage value of the operating voltage, the clock signal of the operating frequency corresponding to the instantaneous voltage value. Therefore, the voltage input to the processing module 200 by the power supply module 100 and the clock signal input to the processing module 200 by the clock generator module 300 change rapidly at the same time. In other words, the operating frequency of the processing module 200 changes rapidly with the operating voltage.

For example, after the power supply module 100 supplies power to each of the processing module 200 and the clock generator module 300, the clock generator module 300 obtains the operating voltage of the processing module 200, follows the fluctuating operating voltage to rapidly generate a clock signal of a corresponding frequency, and sends the clock signal to the processing module 200. The clock signal indicates the operating frequency of the processing module 200. The clock signal includes a clock frequency, and the clock frequency may also be represented as an operating frequency. In this case, after receiving the clock signal, the processing module 200 runs based on the operating frequency corresponding to the clock signal.

As shown in FIG. 4, when the operating voltage of the processing module 200 decreases, the clock frequency output by the clock generator also decreases. When the operating voltage of the processing module 200 increases, the clock frequency output by the clock generator also increases, and a following speed may reach a nanosecond level.

As shown in FIG. 5, the clock generator module is a tunable ring clock generator. In the clock generator module, when the operating voltage decreases, a delay of a delay circuit 1 increases so that an RS flip-flop postpones a falling edge of the clock signal, and a delay of a delay circuit 2 increases so that the RS flip-flop postpones a rising edge of the clock signal in a next cycle, to implement a clock frequency decrease; or when the operating voltage increases, a delay of a delay circuit 1 decreases so that an RS flip-flop advances a falling edge of the clock signal, and a delay of a delay circuit 2 decreases so that the RS flip-flop advances a rising edge of the clock signal in a next cycle, to implement a clock frequency increase.

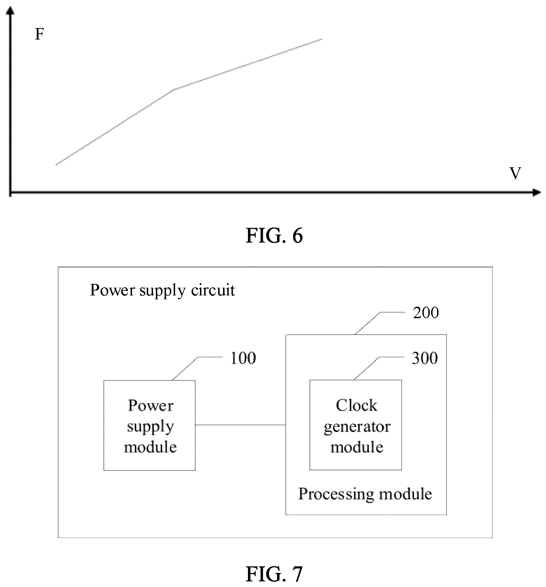

Optionally, the clock generator module 300 is specifically configured to generate, based on the operating voltage, a clock signal that meets a preset frequency-voltage mapping relationship. The preset frequency-voltage mapping relationship is determined based on the processing module 200. To be specific, the clock generator module 300 generates, based on a fluctuation of the operating voltage, a clock signal with a changing frequency. The clock signal includes a clock frequency, and the clock frequency always meets the preset frequency-voltage mapping relationship of the processing module 200. As shown in FIG. 6, the preset frequency-voltage mapping relationship is an FV (frequency-voltage) curve. In the FV curve, an operating frequency F corresponding to an operating voltage V at each point is a highest and most stable operating frequency of the processing module 200 at the operating voltage. Alternatively, in the FV curve, an operating voltage V corresponding to an operating frequency F at each point is a lowest operating voltage of the processing module 200 at the operating frequency. This is not limited in this embodiment of this application. In addition, FV curves of different processing modules 200 are different. When running in an operating condition that meets the FV curve, the processing module 200 does not crash, and normal and stable running can be ensured. After the processing module 200 is determined, the FV curve of the processing module 200 is preset in the clock generator module 300. After obtaining the operating voltage, the clock generator module 300 determines, based on the FV curve, a clock frequency *fₐ* corresponding to the operating voltage, or determines, based on the FV curve, a clock frequency not higher than the clock frequency *fₐ*, and outputs the clock frequency to the processing module 200. In this way, the processing module 200 can always maintain an operating condition that meets the FV curve, that is, operate at an operating frequency no higher than that determined by the FV curve.

Optionally, the clock generator module 300 is integrated with the processing module 200. For example, the clock generator module 300 and the processing module 200 are integrated into a chip or a module. Alternatively, as shown in FIG. 7, the clock generator module 300 is integrated into the processing module 200. In this way, the processing module 200 and the clock generator module 300 can implement fast data exchange. This further ensures that an output following speed of the clock generator module 300 reaches a nanosecond level.

In embodiments of this application, the operating voltage of the processing module is obtained, and the clock signal that indicates the operating frequency of the processing module is generated based on the operating voltage, so that the processing module runs at an operating frequency corresponding to a current operating voltage. Even if the operating voltage fluctuates, the processing module does not run abnormally. This improves running reliability and running stability of the processor without increasing power consumption.

### Embodiment 2

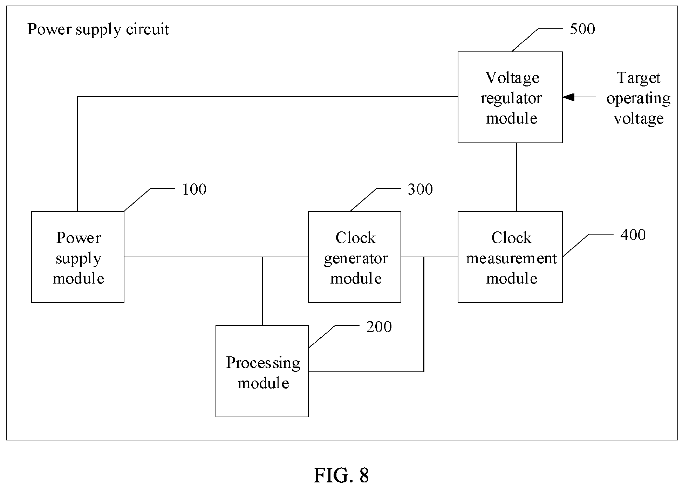

As shown in FIG. 8, based on embodiment 1, an embodiment of the power supply circuit provided in embodiments of this application further includes a clock measurement module 400 and a voltage regulator module 500.

Specifically, the clock measurement module 400 is configured to determine an average frequency of variable operating frequencies within a preset time period. The voltage regulator module 500 is configured to: receive a target operating frequency and the average frequency, and adjust, based on the average frequency and the target operating frequency, the operating voltage used by the power supply module 100 to supply power. The target operating frequency is preset based on a running service of the processing module 200.

**In** the power supply circuit, the clock measurement module 400 is connected to the clock generator module 300. The clock measurement module 400 obtains, in real time, the clock signal output by the clock generator module 300, and determines an average frequency of the clock signal in a preset time period. The preset time period is a time period preset by a user. The user may determine the length of the preset time period based on an actual situation. This is not limited in this embodiment of this application. The voltage regulator module 500 is connected to the clock measurement module 400. The voltage regulator module 500 receives the average frequency and the target operating frequency of the processing module 200. The voltage regulator module 500 is further connected to the power supply module 100. The voltage regulator module 500 adjusts power supply of the power supply module 100 based on the average frequency and the target operating frequency. The target operating frequency is preset based on the running service of the processing module 200, that is, the processing module 200 presets a target operating frequency corresponding to each of different running services. For example, the processing module 200 presets a target operating frequency of a service A as *f*₀, and presets a target operating frequency of a service B as *f*₁. Further, the processing module 200 may further preset a target operating frequency of the service A in a scenario 1 as *f*₂, and preset a target operating frequency of the service B in the scenario 1 as *f*₃. The target operating frequency may be sent by the processing module 200 to the voltage regulator module 500, may be sent by another module, or may be obtained by the voltage regulator module 500 based on current service information that the processing module 200 sends to the voltage regulator module 500. This is not limited in this embodiment of this application.

**In** this embodiment, if it is ensured that the processing module 200 runs in the operating condition that meets the FV curve of the processing module 200, to further ensure that running of the processing module 200 can meet an operating frequency required by a current running service, power supply of the power supply module 100 further needs to be adjusted. For example, during adjustment of the power supply of the power supply module 100, the clock measurement module 400 determines that the average frequency of the clock signal in the preset time period is *f*, and the voltage regulator module 500 compares the average frequency f with the target operating frequency *fᵢ* to determine a deviation *f* - *fᵢ* between the average frequency and the target operating frequency. When *f* - *fᵢ* > 0, the output voltage of the power supply module 100 is decreased. When *f* - *fᵢ* < 0, the output voltage of the power supply module 100 is increased.

**Table 1**

| Target operating frequency | Minimum operating voltage |
|---|---|
| *f*₀ | *V*₀ |
| *f*₁ | *V*₁ |
| ... | ... |
| *fₙ* | *Vₙ* |

Optionally, a frequency-voltage comparison table is preset in the voltage regulator module 500. As shown in table 1, the frequency-voltage comparison table includes a mapping relationship between a target operating frequency *fᵢ* and a minimum operating voltage, and the minimum operating voltage is a minimum operating voltage required when the processing module 200 runs at the target operating frequency *fᵢ*. In this case, the voltage regulator module 500 can determine a specific regulation value for increasing or decreasing the output voltage of the power supply module 100.

Optionally, because *f* fluctuates back and forth in a range of *fᵢ*, the voltage regulator module 500 accordingly adjusts the power supply of the power supply module 100 back and forth, generating loop following oscillation. Therefore, in this embodiment of this application, it is set that the voltage regulator module 500 adjusts the power supply of the power supply module 100 only when |*f - fᵢ*| *> ∇f,* where *∇f* is a preset reference value that is not 0. This can add a callback window for frequency comparison, and avoid loop following oscillation.

Optionally, the voltage regulator module 500 adjusts the power supply of the power supply module 100 by a specific adjustment value *Vᵢ* = *V*_{*i_*1} ± *∇V*, where *V*_{*i-*1} is a voltage in a last round of voltage regulation, *Vᵢ* is a voltage in this round of voltage regulation, and *∇V* is a preset voltage regulation increment. In a voltage regulation process, if *f - fᵢ > ∇f,* a current voltage regulation voltage *Vᵢ = V*_{*i-*1} *- VV,* and if *fᵢ - f > ∇f,* the current voltage regulation voltage *Vᵢ = V*_{*i-*1} + *VV.*

Optionally, the voltage regulator module 500 adjusts the power supply of the power supply module 100 by a specific adjustment value *Vᵢ* = *max*{*V*_{*i-*1} ± *∇V,AVSn - a*}, where *AVSn* is a minimum operating voltage that is obtained by the processing module 200 through testing on a production line and that is required by the processing module 200 to operate in a clock frequency *fᵢ* condition, and *a* is a maximum dip value of the power supply dip. This can add lower limit protection of voltage decreasing, and avoid that an excessive decrease of the output voltage by the voltage regulator module 500 causes an abnormality of the power supply circuit.

In this embodiment of this application, if it is ensured that the processing module runs in the operating condition that meets the FV curve of the processing module, the output voltage of the power supply module is further adjusted, to ensure that an average operating frequency of the processing module approaches a target operating frequency of a current running service. Compared with conventional dynamic voltage and frequency scaling (DVFS), in the present DVFS, an operating frequency of the processing module is the target operating frequency, and an operating voltage of the processing module is determined in advance, and is in a one-to-one correspondence with the target operating frequency. The DVFS requires the power supply module to stably output the predetermined operating voltage, but it is quite difficult to stabilize the voltage of the power supply with high precision (millivolt level) in engineering. Because a running status of the processing module is transient, and consumption of the processing module is transient, a current drawn by the processing module from the power supply is also transient. When the drawn current is large (ampere level), it is difficult for the power supply to ensure that the output voltage of the power supply is fixed, and a power supply dip usually occurs. Conventionally, to avoid that the power supply dip causes an abnormality of the processing module, during adjustment of the voltage output by the power supply, the output voltage needs to be increased additionally. That is, compared with an ideal minimum voltage requirement, a specific voltage increment is reserved additionally, and these reserved voltage increments increase power consumption of the processing module. In this embodiment of this application, the following is implemented: Frequency-based voltage transformation is performed after voltage-based frequency conversion, so that a transient voltage fluctuation is allowed, and the power supply dip does not cause a running abnormality to a processor. Therefore, no additional voltage increment needs to be reserved, and the power supply module outputs a minimum voltage. This greatly reduces power consumption of the processing module, resolves problems of heat dissipation and a battery life of the mobile terminal, and improves user experience.

### Embodiment 3

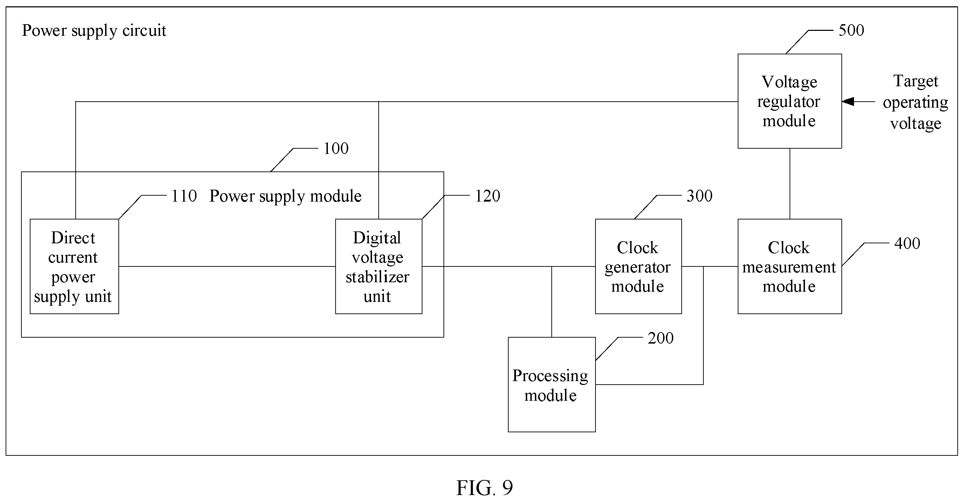

As shown in FIG. 9, based on embodiment 2, in an embodiment of the power supply circuit provided in embodiments of this application, the power supply module 100 includes a digital voltage stabilizer unit 120 and a direct current power supply unit 110.

Specifically, the digital voltage stabilizer unit 120 is configured to supply power to the processing module 200 at the operating voltage, and when a power supply dip occurs, increase a voltage value for supplying power to the processing module 200 to a voltage value before the power supply dip. The direct current power supply unit 110 is configured to supply power to the digital voltage stabilizer unit 120. The voltage regulator module 500 is specifically configured to adjust power supply of the digital voltage stabilizer unit 120 and/or the direct current power supply unit 110.

In the power supply circuit, the digital voltage stabilizer unit 120 is connected to the processing module 200, the digital voltage stabilizer unit 120 supplies power to the processing module 200, the digital voltage stabilizer unit 120 is further connected to a clock generator module, and the digital voltage stabilizer unit 120 supplies power to the clock generator module. The direct current power supply unit 110 is connected to the digital voltage stabilizer unit 120, the direct current power supply unit 110 supplies power to the digital voltage stabilizer unit 120, and the voltage regulator module 500 is connected to each of the direct current power supply unit 110 and the digital voltage stabilizer unit 120. The voltage regulator module 500 adjusts power supply output voltages of the digital voltage stabilizer unit 120 and the direct current power supply unit 110.

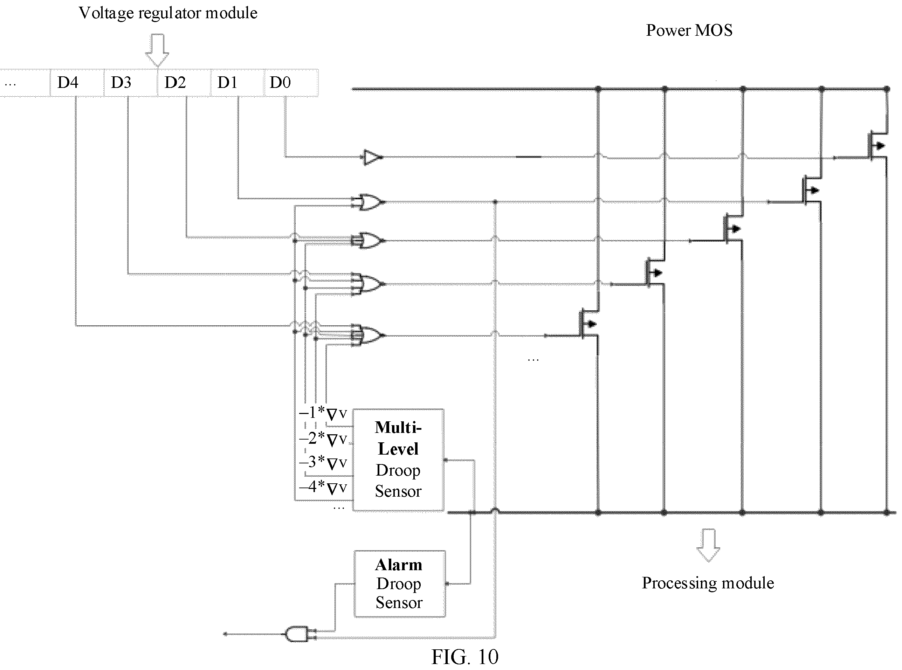

In this embodiment, the power supply module 100 is a buck power supply, and the buck power supply needs a large quantity of power transistors (power MOSs) to be used as power switches of the processing module 200. In this embodiment of this application, as shown in FIG. 10, the digital voltage stabilizer unit uses a power MOS, and on the basis of an existing power MOS, a control circuit is superposed, so that a digital voltage stabilizer unit with low costs and high integration can be obtained. This saves an area and costs.

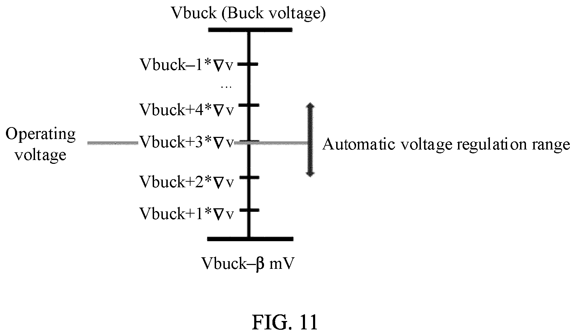

Optionally, the digital voltage stabilizer unit 120 includes a logic circuit, a voltage provided by the direct current power supply unit 110 is output to the digital voltage stabilizer unit 120, and the voltage regulation unit determines a voltage stabilization range of the digital voltage stabilizer unit 120, that is, the voltage regulation unit inputs a control signal to the logic circuit to control a switching ratio of the power MOS. A range of the voltage output by the digital voltage stabilizer unit 120 is determined, to implement voltage stabilization. As shown in FIG. 11, a voltage provided by the direct current power supply unit 110 is *V_{buck},* and a minimum operating voltage required by the processing module 200 is *Vₘᵢₙ = V_{buck} - β*. In this case, the voltage regulation unit controls the switching ratio of the power MOS, so that the operating voltage of the processing module 200 is stabilized at a plurality of different voltage levels of *Vₘᵢₙ + 2VV, Vₘᵢₙ + 4VV, Vₘᵢₙ* + *6VV,* ..., and the digital voltage stabilizer unit 120 may automatically regulate the voltage within the range of *V_{buck} - β, V_{buck}.* The output voltage of the digital voltage stabilizer unit 120 is defined as *V_{core},* and the digital voltage stabilizer unit 120 has a transient voltage adjustment capability of *V_{buck} - V_{core}.* To ensure that the digital voltage stabilizer unit 120 can supply a sufficient transient voltage adjustment capability, *V_{buck} - V_{core} > X* is preset and limited, where X is a transient regulation voltage value reserved for the digital voltage stabilizer unit 120.

Optionally, the digital voltage stabilizer unit 120 further includes a multi-level comparison unit (multi-level droop sensor). When a load current of the processing module 200 suddenly increases and the power supply dip occurs, the multi-level comparison unit generates a power supply dip indication signal through comparison. The switching ratio of the power MOS is reversely controlled by using the logic circuit, so that the voltage provided for the processing module 200 is instantaneously increased, and is restored to a normal output voltage value.

Optionally, the digital voltage stabilizer unit 120 further includes an alarm unit (alarm droop sensor). When the power MOS is all on, a voltage increase cannot be implemented by controlling the switching ratio of the power MOS. In this case, the alarm unit may detect that a dip of the voltage provided by the digital voltage stabilizer unit 120 exceeds an alarm threshold, and send an alarm signal to the voltage regulator module 500. The voltage regulator module 500 increases, based on the alarm signal, a voltage value provided by the direct current power supply unit 110 for the digital voltage stabilizer unit 120. For example, the voltage regulator module 500 is notified of the reserved additional voltage regulation value *X + ∇V',* and the voltage provided by the direct current power supply unit 110 is increased by *VV',* where *∇V'* is a preset reference value, and X is a transient regulation voltage value reserved by the digital voltage stabilizer unit 120.

Further, because the digital voltage stabilizer unit 120 further needs to supply power to the clock generator module 300, when the power supply dip occurs, the digital voltage stabilizer unit 120 may automatically regulate the voltage transiently for recovery, to meet an operating voltage of the clock generator module 300 and ensure normal operation of the clock generator module 300.

In addition, during adjustment of the power supply of the power supply module 100, the voltage regulation unit regulates each of the direct current power supply unit 110 and the digital voltage stabilizer unit 120. When the voltage is increased, the voltage of the digital voltage stabilizer unit 120 is preferentially increased, but needs to meet *V_{buck} - V_{core} > X* or *V_{buck} - V_{core} > X + VV'.* When the voltage is decreased, the voltage of the direct current power supply unit 110 is preferentially decreased.

In consideration of the foregoing cases, when the digital voltage stabilizer unit 120 supplies power to the processing module 200, there are two cases, and the cases are separately described in detail below.

1. The digital voltage stabilizer unit 120 is disposed at a remote end of the processing module 200.

Refer to FIG. 8. For example, an operating voltage required by the processing module 200 is 0.9 V, the direct current power supply unit 110 provides a voltage of 0.95 V for the digital voltage stabilizer unit 120, and the digital voltage stabilizer unit 120 decreases the voltage of 0.95 V to supply an output voltage of 0.91 V. After a circuit loss, the processing module 200 obtains an operating voltage of 0.9 V.

When the power supply dip occurs, the operating voltage dips to 0.85 V. In this case, the digital voltage stabilizer unit 120 automatically regulates the voltage to restore an output voltage of 0.91 V. After a circuit loss, the processing module 200 obtains an operating voltage of 0.9 V

When the power supply dip occurs, the operating voltage dips to 0.8 V. In this case, the digital voltage stabilizer unit 120 automatically regulates the voltage and sends an alarm signal. After the digital voltage regulator module rapidly restores the output voltage of 0.91 V, the voltage regulator module 500 reserves a voltage regulation value of 0.05 V + 0.05 V. It is equivalent to that the voltage regulator module 500 increases the power supply of the power supply module 100. Specifically, the voltage regulator module 500 preferably increases the voltage of the direct current power supply unit 110 by 0.05 V. In this case, an output voltage of the direct current power supply unit 110 is 1 V, and the digital voltage stabilizer unit 120 provides an output voltage of 0.91 V. After a circuit loss, the processing module 200 obtains an operating voltage of 0.9 V.

2. The digital voltage stabilizer unit 120 is disposed at a near end of the processing module 200.

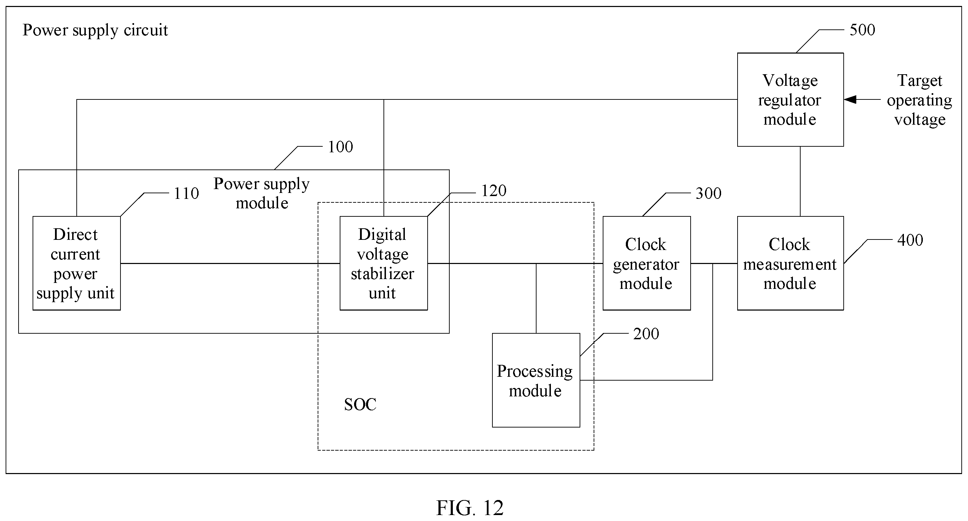

As shown in FIG. 12, the digital voltage stabilizer unit 120 and the processing module 200 are integrated into a chip (SOC). In this case, a voltage provided by the digital voltage stabilizer unit 120 is an operating voltage, and a transient response of the digital voltage stabilizer unit 120 is faster.

For example, an operating voltage required by the processing module 200 is 0.9 V, and the direct current power supply unit 110 provides an output voltage of 0.96 V for the digital voltage stabilizer unit 120. After a circuit loss, the digital voltage stabilizer unit 120 obtains a voltage of 0.95 V, decreases the voltage, and provides an operating voltage of 0.9 V, and the processing module 200 obtains the operating voltage of 0.9 V.

When the power supply dip occurs, the operating voltage dips to 0.85 V. In this case, the digital voltage stabilizer unit 120 automatically regulates the voltage to restore an output voltage of 0.9 V, and the processing module 200 obtains an operating voltage of 0.9 V.

When the power supply dip occurs, the operating voltage dips to 0.8 V. In this case, the digital voltage stabilizer unit 120 automatically regulates the voltage and sends an alarm signal. After the digital voltage regulator module rapidly restores the output of the operating voltage of 0.9 V, the voltage regulator module 500 reserves a voltage regulation value of 0.05 V + 0.05 V. It is equivalent to that the voltage regulator module 500 increases the power supply of the power supply module 100. Specifically, the voltage regulator module 500 increases the voltage of the direct current power supply unit 110 by 0.05 V. In this case, an output voltage of the direct current power supply unit 110 is 1.01 V, the digital voltage stabilizer unit 120 provides an operating voltage of 0.9 V, and the processing module 200 obtains the operating voltage of 0.9 V.

In this embodiment of this application, when the power supply dip occurs, the operating voltage may be rapidly and automatically adjusted, and a voltage before the dip is rapidly restored. This improves a transient response capability and ensures normal operation of the clock generator module when a requirement of the processing module is met, and further ensures normal voltage regulation of the voltage regulator module. In addition, an alarm prompt can be generated when the power supply dips excessively, so that the voltage regulator module reserves an additional voltage to ensure normal operation of the processing module.

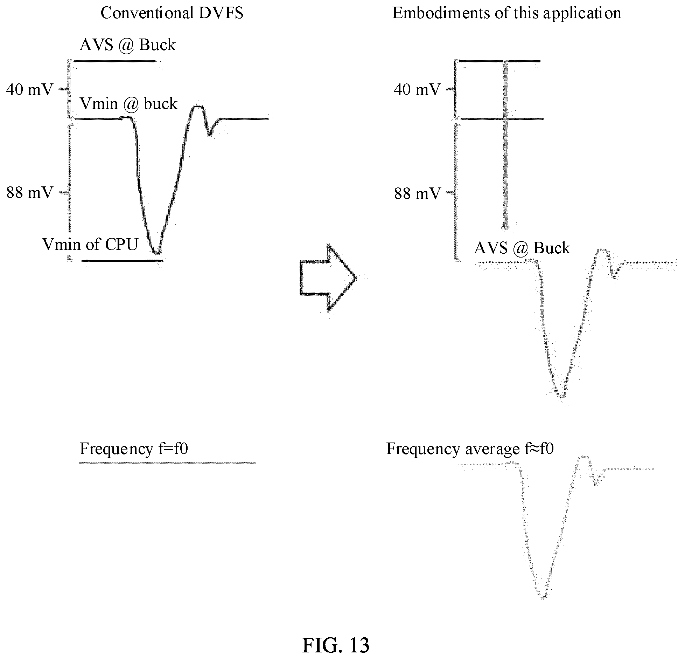

The following can be learned from summarizing the foregoing embodiments. As shown in FIG. 13, for example, a processor (CPU) of a specific mobile phone is used as an example. A maximum power supply dip range is *V_{drop}, V_{drop}* is assumed to be 88 mV, and a minimum operating voltage (*Vₘᵢₙ* of CPU) required by the processor is 1 V and remains unchanged. In a conventional DVFS solution, a minimum output voltage (*Vₘᵢₙ*) of the buck power supply is 1.088 mV. In addition, factors such as component aging, a process difference, and a power supply precision error need to be considered. Therefore, an additional 40 mV uncertain voltage needs to be reserved. If the DVFS sets the operating frequency *f* of the processor to be the target operating frequency *f*₀ and remain unchanged, an actual output voltage (AVS) of the buck power supply is 1.128 mV, and is 128 mV higher than *Vₘᵢₙ* of CPU. However, in the power supply circuit provided in this embodiment of this application, the operating frequency of the processor rapidly changes with the operating voltage, and an average operating frequency (average *f* ) is approximately equal to the target operating frequency *f*₀. An actual output voltage (AVS) of the buck power supply fluctuates with the operating frequency, and is approximately 1 V. Compared with the conventional DVFS solution, the actual output voltage (AVS) of the buck power supply can be decreased by nearly 128 mV. This reduces power consumption of the processor by nearly 20%.

### Embodiment 4

In an embodiment of the power supply circuit provided in embodiments of this application, there are N processing modules, N clock generators, N clock measurement modules, one or N voltage regulator modules, and the power supply module includes one direct current power supply unit and N digital voltage stabilizer units. The direct current power supply unit is configured to supply power to the N digital voltage stabilizer units, and the voltage regulator module is specifically further configured to control the direct current power supply unit and the N digital voltage stabilizer units to supply power to the N processing modules, where N is a positive integer greater than 1.

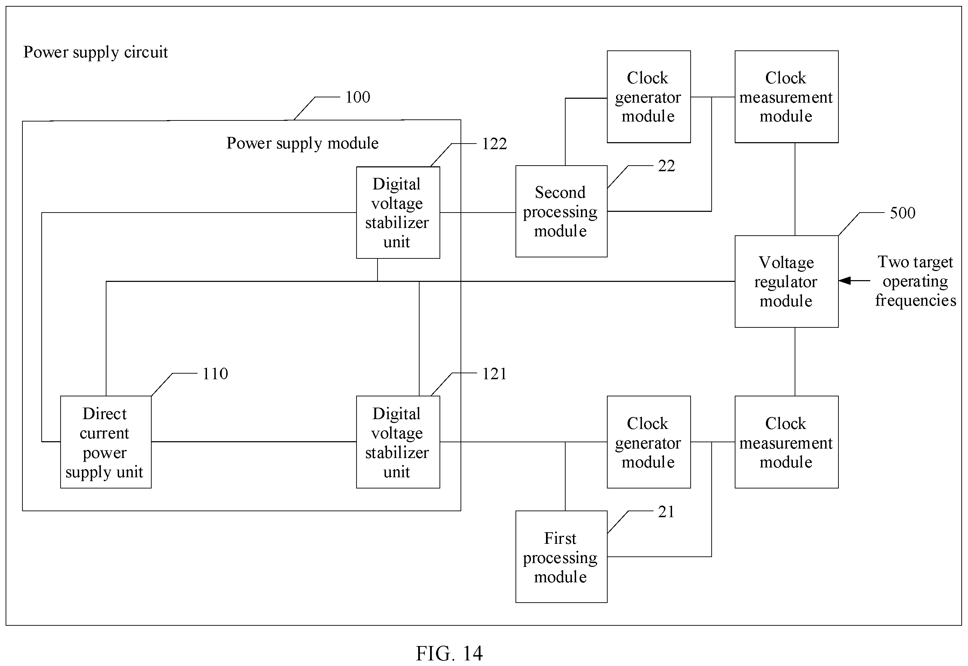

For example, as shown in FIG. 14, N is 2, there is one voltage regulator module 500, and a first processing module 21 and a second processing module 22 independently perform frequency conversion, and share one direct current power supply unit 110. When the output voltages that are of the direct current power supply unit 110 and that are required by the first processing module 21 and the second processing module 22 are inconsistent, the voltage regulator module 500 meets the required highest output voltage. For example, the first processing module 21 requires the direct current power supply unit 110 to output an output voltage of 1 V. The second processing module 22 needs the direct current power supply unit 110 to output an output voltage of 1.2 V. In this case, the voltage regulator module 500 controls the direct current power supply unit 110 to output the output voltage of 1.2 V, and a digital voltage stabilizer unit 121 corresponding to the first processing module 21 may use an additional 0.2 V voltage as a transient voltage adjustment value.

Optionally, the digital voltage stabilizer unit and the processing module corresponding to the digital voltage stabilizer unit are integrated into a chip, that is, the digital voltage stabilizer unit 121 and the first processing module 21 are integrated into a chip, and a digital voltage stabilizer unit 122 and the second processing module 22 are integrated into a chip.

In this embodiment of this application, when a plurality of processing modules share one power supply module, and each processing module independently performs voltage-based frequency conversion, the voltage regulator module controls the power supply module to select an output voltage with a highest requirement for outputting. This avoids a control conflict and ensures normal operation of the plurality of processing modules.

The following uses an example to describe a frequency adjustment method provided in embodiments of this application.

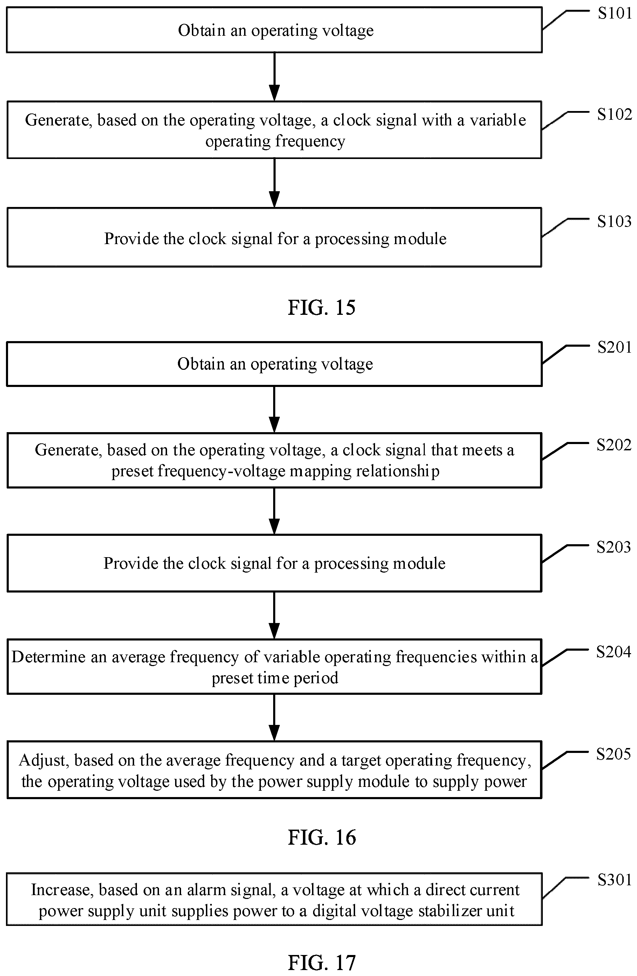

As shown in FIG. 15, in an embodiment of the frequency adjustment method provided in embodiments of this application, the method is applied to a power supply circuit, the power supply circuit includes a power supply module and a processing module, the power supply module is configured to supply power to the processing module at a variable operating voltage, and the method includes the following steps.

S101: Obtain the operating voltage.

S102: Generate, based on the operating voltage, a clock signal with a variable operating frequency.

S103: Provide the clock signal for the processing module.

The processing module is configured to run based on the operating voltage and the operating frequency.

As shown in FIG. 16, in an embodiment of the frequency adjustment method provided in embodiments of this application, the method is applied to a power supply circuit, the power supply circuit includes a power supply module and a processing module, the power supply module is configured to supply power to the processing module, the processing module is configured to run based on a variable operating voltage and a variable operating frequency, and the method includes the following steps.

S201: Obtain the operating voltage.

S202: Generate, based on the operating voltage, a clock signal that meets a preset frequency-voltage mapping relationship.

S203: Provide the clock signal for the processing module.

S204: Determine an average frequency of variable operating frequencies within a preset time period.

S205: Adjust, based on the average frequency and a target operating frequency, the operating voltage used by the power supply module to supply power.

Optionally, the power supply module includes a direct current power supply unit and a digital voltage stabilizer unit, the direct current power supply unit is configured to supply power to the digital voltage stabilizer unit, the digital voltage stabilizer unit is configured to: supply power to the processing module at the operating voltage, and when a power supply dip occurs, increase the operating voltage to a voltage value before the power supply dip.

Optionally, as shown in FIG. 17, the digital voltage stabilizer unit is further configured to send an alarm signal when the power supply dip occurs, and the method further includes the following step.

S301: Increase, based on the alarm signal, a voltage at which the direct current power supply unit supplies power to the digital voltage stabilizer unit.

Optionally, there are N processing modules, the power supply module includes one direct current power supply unit and N digital voltage stabilizer units, and the direct current power supply unit is configured to supply power to the N digital voltage stabilizer units, where N is a positive integer greater than 1.

Optionally, the digital voltage stabilizer unit and the processing module corresponding to the digital voltage stabilizer unit are integrated into a chip.

For a specific implementation of the frequency adjustment method in this embodiment of this application, refer to the foregoing embodiments of the power supply circuit. The frequency adjustment method in this embodiment of this application has a same beneficial effect as the power supply circuit. Details are not described in this embodiment of this application again.

In the several embodiments provided in this application, it should be understood that the disclosed circuit and method may be implemented in other manners. For example, the described circuit embodiment is merely an example. For example, division into the modules is merely logical function division and may be other division in actual implementation. For example, a plurality of modules or components may be combined or integrated into another system, or some features may be ignored or not performed. In addition, the displayed or discussed mutual couplings or direct couplings or communication connections may be implemented by using some interfaces. The indirect couplings or communication connections between the apparatuses or modules may be implemented in electrical, mechanical, or other forms.

The modules described as separate parts may or may not be physically separate, and parts displayed as modules may or may not be physical modules, that is, may be located at one position, or may be distributed on a plurality of network modules. Some or all of the modules may be selected based on actual requirements to achieve the objectives of the solutions of embodiments.

In addition, functional modules in embodiments of this application may be integrated into one processing module, each module may exist alone physically, or two or more modules may be integrated into one module. The integrated module may be implemented in a form of hardware, or may be implemented in a form of a software functional module.

When the integrated modules are implemented in a form of a software functional module and sold or used as an independent product, the integrated modules may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (ROM), a random access memory (RAM), a magnetic disk, or an optical disc.

## Claims

1. A power supply circuit, comprising a power supply module (100), a processing module (21, 22, 200), and a clock generator module (300), wherein
the power supply module (100) is configured to supply power to the processing module (21, 22, 200) at a variable operating voltage;
the clock generator module (300) is configured to: obtain the operating voltage, generate, based on the operating voltage, a clock signal with a variable operating frequency, and provide the clock signal for the processing module (21, 22, 200); and
the processing module (21, 22, 200) is configured to run based on the operating voltage and the operating frequency:
**characterized by** a clock measurement module (400), connected to the clock generator module (300), wherein the clock measurement module (400) is configured to determine an average frequency of variable operating frequencies within a preset time period; and
a voltage regulator module (500), configured to: receive the average frequency, and adjust, based on the average frequency and a target operating frequency, the operating voltage used by the power supply module (100) to supply power,
wherein the power supply module (100) comprises a direct current power supply unit and a digital voltage stabilizer unit (120-122);
the direct current power supply unit is configured to supply power to the digital voltage stabilizer unit (120-122); and
the digital voltage stabilizer unit (120-122) is configured to: supply power to the processing module (21, 22, 200) at the operating voltage, and when a power supply dip occurs, increase the operating voltage to a voltage value before the power supply dip.

2. The circuit according to claim 1, wherein the clock generator module (300) is specifically configured to generate, based on the operating voltage, the clock signal that meets a preset frequency-voltage mapping relationship.

3. The circuit according to claim 1 or 2, wherein the digital voltage stabilizer unit (120-122) is further configured to send an alarm signal to the voltage regulator module (500) when the power supply dip occurs, and the voltage regulator module (500) is further configured to increase, based on the alarm signal, a voltage at which the direct current power supply unit supplies power to the digital voltage stabilizer unit (120-122).

4. The circuit according to any one of claims 1 to 3, wherein there are N processing modules (21, 22, 200), N clock generator modules (300), N clock measurement modules (400), and one or N voltage regulator modules (500), the power supply module (100) comprises one direct current power supply unit and N digital voltage stabilizer units (120-122), and the direct current power supply unit is configured to supply power to the N digital voltage stabilizer units (120-122), wherein N is a positive integer greater than 1.

5. The circuit according to any one of claims 1 to 4, wherein the digital voltage stabilizer unit (120-122) and the processing module (21, 22, 200) corresponding to the digital voltage stabilizer unit (120-122) are integrated into a chip.

6. The circuit according to any one of claims 1 to 5, wherein the clock generator module (300) is integrated with the processing module (21, 22, 200).

7. A frequency adjustment method, applied to a power supply circuit, wherein the power supply circuit comprises a power supply module (100) and a processing module (21, 22, 200), the power supply module (100) is configured to supply power to the processing module (21, 22, 200) at a variable operating voltage, and the method comprises:
obtaining the operating voltage;
generating, based on the operating voltage, a clock signal with a variable operating frequency;
providing the clock signal for the processing module (21, 22, 200), wherein the processing module (21, 22, 200) is configured to run based on the operating voltage and the operating frequency; **characterized by**
determining an average frequency of variable operating frequencies within a preset time period; and
adjusting, based on the average frequency and a target operating frequency, the operating voltage used by the power supply module (100) to supply power,
wherein the power supply module (100) comprises a direct current power supply unit and a digital voltage stabilizer unit (120-122), the direct current power supply unit is configured to supply power to the digital voltage stabilizer unit (120-122), the digital voltage stabilizer unit (120-122) is configured to: supply power to the processing module (21, 22, 200) at the operating voltage, and when a power supply dip occurs, increase the operating voltage to a voltage value before the power supply dip.

8. The method according to claim 7, wherein the generating, based on the operating voltage, a clock signal with a variable operating frequency comprises:
generating, based on the operating voltage, the clock signal that meets a preset frequency-voltage mapping relationship.

9. The method according to claim 7 or 8, wherein the digital voltage stabilizer unit (120-122) is further configured to send an alarm signal when the power supply dip occurs, and the method further comprises:
increasing, based on the alarm signal, a voltage at which the direct current power supply unit supplies power to the digital voltage stabilizer unit (120-122).

10. The method according to any one of claims 7 to 9, wherein there are N processing modules (21, 22, 200), the power supply module (100) comprises one direct current power supply unit and N digital voltage stabilizer units (120-122), and the direct current power supply unit is configured to supply power to the N digital voltage stabilizer units (120-122), wherein N is a positive integer greater than 1.

11. The method according to any one of claims 7 to 10, wherein the digital voltage stabilizer unit (120-122) and the processing module (21, 22, 200) corresponding to the digital voltage stabilizer unit (120-122) are integrated into a chip.

## Patentansprüche

1. Leistungsversorgungsschaltung, die ein Leistungsversorgungsmodul (100), ein Verarbeitungsmodul (21, 22, 200) und ein Taktgeneratormodul (300) umfasst, wobei
das Leistungsversorgungsmodul (100) dazu ausgelegt ist, dem Verarbeitungsmodul (21, 22, 200) Leistung mit einer variablen Betriebsspannung zuzuführen;
das Taktgeneratormodul (300) zu Folgendem ausgelegt ist: Erhaltern der Betriebsspannung, Erzeugen, basierend auf der Betriebsspannung, eines Taktsignals mit einer variablen Betriebsfrequenz und Bereitstellen des Taktsignals für das Verarbeitungsmodul (21, 22, 200); und
das Verarbeitungsmodul (21, 22, 200) dazu ausgelegt ist, basierend auf der Betriebsspannung und der Betriebsfrequenz zu laufen:
**gekennzeichnet durch** ein Taktmessmodul (400), das mit dem Taktgeneratormodul (300) verbunden ist, wobei das Taktmessmodul (400) dazu ausgelegt ist, eine durchschnittliche Frequenz variabler Betriebsfrequenzen innerhalb eines voreingestellten Zeitraums zu bestimmen; und
ein Spannungsreglermodul (500), das zu Folgendem ausgelegt ist: Empfangen der durchschnittlichen Frequenz und Anpassen, basierend auf der durchschnittlichen Frequenz und einer Zielbetriebsfrequenz, der Betriebsspannung, die durch das Leistungsversorgungsmodul (100) zur Zufuhr von Leistung verwendet wird,
wobei das Leistungsversorgungsmodul (100) eine Gleichstromleistungsversorgungseinheit und eine digitale Spannungsstabilisatoreinheit (120-122) umfasst;
die Gleichstromleistungsversorgungseinheit dazu ausgelegt ist, der digitalen Spannungsstabilisatoreinheit (120-122) Leistung zuzuführen; und
die digitale Spannungsstabilisatoreinheit (120-122) zu Folgendem ausgelegt ist: Zuführen von Leistung an das Verarbeitungsmodul (21, 22, 200) mit der Betriebsspannung, und bei Auftreten eines Leistungsversorgungsabfalls, Erhöhen der Betriebsspannung auf einen Spannungswert vor dem Leistungsversorgungsabfall.

2. Schaltung nach Anspruch 1, wobei das Taktgeneratormodul (300) insbesondere dazu ausgelegt ist, basierend auf der Betriebsspannung das Taktsignal zu erzeugen, das eine voreingestellte Frequenz-Spannung-Abbildungsbeziehung erfüllt.

3. Schaltung nach Anspruch 1 oder 2, wobei die digitale Spannungsstabilisatoreinheit (120-122) ferner dazu ausgelegt ist, ein Alarmsignal an das Spannungsreglermodul (500) zu senden, wenn der Leistungsversorgungsabfall auftritt, und das Spannungsreglermodul (500) ferner dazu ausgelegt ist, basierend auf dem Alarmsignal eine Spannung zu erhöhen, mit der die Gleichstromleistungsversorgungseinheit der digitalen Spannungsstabilisatoreinheit (120-122) Leistung zuführt.

4. Schaltung nach einem der Ansprüche 1 bis 3, wobei N Verarbeitungsmodule (21, 22, 200), N Taktgeneratormodule (300), N Taktmessmodule (400) und ein oder N Spannungsreglermodule (500) vorhanden sind, das Leistungsversorgungsmodul (100) eine Gleichstromleistungsversorgungseinheit und N digitale Spannungsstabilisatoreinheiten (120-122) umfasst und die Gleichstromleistungsversorgungseinheit dazu ausgelegt ist, den N digitalen Spannungsstabilisatoreinheiten (120-122) Leistung zuzuführen, wobei N eine positive ganze Zahl größer als 1 ist.

5. Schaltung nach einem der Ansprüche 1 bis 4, wobei die digitale Spannungsstabilisatoreinheit (120-122) und das Verarbeitungsmodul (21, 22, 200), das der digitalen Spannungsstabilisatoreinheit (120-122) entspricht, in einen Chip integriert sind.

6. Schaltung nach einem der Ansprüche 1 bis 5, wobei das Taktgeneratormodul (300) mit dem Verarbeitungsmodul (21, 22, 200) integriert ist.

7. Frequenzanpassungsverfahren, das auf eine Leistungsversorgungsschaltung angewendet wird, wobei die Leistungsversorgungsschaltung ein Leistungsversorgungsmodul (100) und ein Verarbeitungsmodul (21, 22, 200) umfasst, wobei das Leistungsversorgungsmodul (100) dazu ausgelegt ist, dem Verarbeitungsmodul (21, 22, 200) Leistung mit einer variablen Betriebsspannung zuzuführen, und das Verfahren Folgendes umfasst:
Erhalten der Betriebsspannung;
Erzeugen, basierend auf der Betriebsspannung, eines Taktsignals mit einer variablen Betriebsfrequenz;
Bereitstellen des Taktsignals für das Verarbeitungsmodul (21, 22, 200), wobei das Verarbeitungsmodul (21, 22, 200) dazu ausgelegt ist, basierend auf der Betriebsspannung und der Betriebsfrequenz zu laufen; **gekennzeichnet durch**
Bestimmen einer durchschnittlichen Frequenz variabler Betriebsfrequenzen innerhalb eines voreingestellten Zeitraums; und
Anpassen, basierend auf der durchschnittlichen Frequenz und einer Zielbetriebsfrequenz, der Betriebsspannung, die durch das Leistungsversorgungsmodul (100) verwendet wird, um Leistung zuzuführen,
wobei das Leistungsversorgungsmodul (100) eine Gleichstromleistungsversorgungseinheit und eine digitale Spannungsstabilisatoreinheit (120-122) umfasst, die Gleichstromleistungsversorgungseinheit dazu ausgelegt ist, der digitalen Spannungsstabilisatoreinheit (120-122) Leistung zuzuführen, die digitale Spannungsstabilisatoreinheit (120-122) zu Folgendem ausgelegt ist: Zuführen von Leistung an das Verarbeitungsmodul (21, 22, 200) mit der Betriebsspannung und bei Auftreten eines Leistungsversorgungsabfalls, Erhöhen der Betriebsspannung auf einen Spannungswert vor dem Leistungsversorgungsabfall.

8. Verfahren nach Anspruch 7, wobei das Erzeugen, basierend auf der Betriebsspannung, eines Taktsignals mit einer variablen Betriebsfrequenz Folgendes umfasst:
Erzeugen, basierend auf der Betriebsspannung, des Taktsignals, das eine voreingestellte Frequenz-Spannung-Abbildungsbeziehung erfüllt.

9. Verfahren nach Anspruch 7 oder 8, wobei die digitale Spannungsstabilisatoreinheit (120-122) ferner dazu ausgelegt ist, ein Alarmsignal zu senden, wenn der Leistungsversorgungsabfall auftritt, und das Verfahren ferner Folgendes umfasst:
Erhöhen, basierend auf dem Alarmsignal, einer Spannung, mit der die Gleichstromversorgungseinheit der digitalen Spannungsstabilisatoreinheit (120-122) Leistung zuführt.

10. Verfahren nach einem der Ansprüche 7 bis 9, wobei N Verarbeitungsmodule (21, 22, 200) vorhanden sind, das Leistungsversorgungsmodul (100) eine Gleichstromleistungsversorgungseinheit und N digitale Spannungsstabilisatoreinheiten (120-122) umfasst und die Gleichstromleistungsversorgungseinheit dazu ausgelegt ist, den N digitalen Spannungsstabilisatoreinheiten (120-122) Leistung zuzuführen, wobei N eine positive ganze Zahl größer als 1 ist.

11. Verfahren nach einem der Ansprüche 7 bis 10, wobei die digitale Spannungsstabilisatoreinheit (120-122) und das Verarbeitungsmodul (21, 22, 200), das der digitalen Spannungsstabilisatoreinheit (120-122) entspricht, in einen Chip integriert sind.

## Revendications

1. Circuit d'alimentation électrique, comprenant un module d'alimentation électrique (100), un module de traitement (21, 22, 200), et un module générateur d'horloge (300),
le module d'alimentation électrique (100) étant configuré pour alimenter le module de traitement (21, 22, 200) à une tension de fonctionnement variable ;
le module générateur d'horloge (300) étant configuré pour : obtenir la tension de fonctionnement, générer, sur la base de la tension de fonctionnement, un signal d'horloge ayant une fréquence de fonctionnement variable, et fournir le signal d'horloge pour le module de traitement (21, 22, 200) ; et
le module de traitement (21, 22, 200) étant configuré pour fonctionner sur la base de la tension de fonctionnement et de la fréquence de fonctionnement,
**caractérisé par** un module de mesure d'horloge (400), connecté au module générateur d'horloge (300), le module de mesure d'horloge (400) étant configuré pour déterminer une fréquence moyenne de fréquences de fonctionnement variables sur une période de temps prédéfinie ; et
un module régulateur de tension (500), configuré pour : recevoir la fréquence moyenne, et ajuster, sur la base de la fréquence moyenne et d'une fréquence de fonctionnement cible, la tension de fonctionnement utilisée par le module d'alimentation électrique (100) pour alimenter,
le module d'alimentation électrique (100) comprenant une unité d'alimentation électrique en courant continu et une unité de stabilisation de tension numérique (120-122) ;
l'unité d'alimentation électrique en courant continu étant configurée pour alimenter l'unité de stabilisation de tension numérique (120-122) ; et
l'unité de stabilisation de tension numérique (120-122) étant configurée pour : alimenter le module de traitement (21, 22, 200) à la tension de fonctionnement et, lorsqu'un creux d'alimentation électrique se produit, augmenter la tension de fonctionnement jusqu'à une valeur de tension antérieure au creux d'alimentation électrique.

2. Circuit selon la revendication 1, dans lequel le module générateur d'horloge (300) est plus particulièrement configuré pour générer, sur la base de la tension de fonctionnement, le signal d'horloge qui vérifie une relation de correspondance fréquence-tension prédéfinie.

3. Circuit selon la revendication 1 ou 2, dans lequel l'unité de stabilisation de tension numérique (120-122) est en outre configurée pour envoyer un signal d'alarme au module régulateur de tension (500) lorsque le creux d'alimentation électrique se produit, et le module régulateur de tension (500) est en outre configuré pour augmenter, sur la base du signal d'alarme, une tension à laquelle l'unité d'alimentation électrique en courant continu alimente l'unité de stabilisation de tension numérique (120-122).

4. Circuit selon l'une quelconque des revendications 1 à 3, dans lequel sont présents N modules de traitement (21, 22, 200), N modules générateurs d'horloge (300), N modules de mesure d'horloge (400), et un ou N modules régulateurs de tension (500), le module d'alimentation électrique (100) comprend une seule unité d'alimentation électrique en courant continu et N unités de stabilisation de tension numériques (120-122), et l'unité d'alimentation électrique en courant continu est configurée pour alimenter les N unités de stabilisation de tension numériques (120-122), N étant un entier positif supérieur à 1.

5. Circuit selon l'une quelconque des revendications 1 à 4, dans lequel l'unité de stabilisation de tension numérique (120-122) et le module de traitement (21, 22, 200) correspondant à l'unité de stabilisation de tension numérique (120-122) sont intégrés dans une puce.

6. Circuit selon l'une quelconque des revendications 1 à 5, dans lequel le module générateur d'horloge (300) est intégré au module de traitement (21, 22, 200).

7. Procédé d'ajustement de fréquence, appliqué à un circuit d'alimentation électrique, le circuit d'alimentation électrique comprenant un module d'alimentation électrique (100) et un module de traitement (21, 22, 200), le module d'alimentation électrique (100) étant configuré pour alimenter le module de traitement (21, 22, 200) à une tension de fonctionnement variable, et le procédé comprenant :
l'obtention de la tension de fonctionnement ;
la génération, sur la base de la tension de fonctionnement, d'un signal d'horloge ayant une fréquence de fonctionnement variable ;
la fourniture du signal d'horloge pour le module de traitement (21, 22, 200), le module de traitement (21, 22, 200) étant configuré pour fonctionner sur la base de la tension de fonctionnement et de la fréquence de fonctionnement ; **caractérisé par**
la détermination d'une fréquence moyenne de fréquences de fonctionnement variables sur une période de temps prédéfinie ; et
l'ajustement, sur la base de la fréquence moyenne et d'une fréquence de fonctionnement cible, de la tension de fonctionnement utilisée par le module d'alimentation (100) pour alimenter,
dans lequel le module d'alimentation électrique (100) comprend une unité d'alimentation électrique en courant continu et une unité de stabilisation de tension numérique (120-122), l'unité d'alimentation électrique en courant continu est configurée pour alimenter l'unité de stabilisation de tension numérique (120-122), l'unité de stabilisation de tension numérique (120-122) est configurée pour : alimenter le module de traitement (21, 22, 200) à la tension de fonctionnement et, lorsqu'un creux d'alimentation électrique se produit, augmenter la tension de fonctionnement jusqu'à une valeur de tension antérieure au creux d'alimentation électrique.

8. Procédé selon la revendication 7, dans lequel la génération, sur la base de la tension de fonctionnement, d'un signal d'horloge ayant une fréquence de fonctionnement variable comprend :
la génération, sur la base de la tension de fonctionnement, du signal d'horloge qui satisfait une relation de correspondance fréquence-tension prédéfinie.

9. Procédé selon la revendication 7 ou 8, dans lequel l'unité de stabilisation de tension numérique (120-122) est en outre configurée pour envoyer un signal d'alarme lorsque le creux d'alimentation électrique se produit, et le procédé comprenant en outre :
l'augmentation, sur la base du signal d'alarme, d'une tension à laquelle l'unité d'alimentation électrique en courant continu alimente l'unité de stabilisation de tension numérique (120-122).

10. Procédé selon l'une quelconque des revendications 7 à 9, dans lequel sont présents N modules de traitement (21, 22, 200), le module d'alimentation électrique (100) comprend une seule unité d'alimentation électrique en courant continu et N unités de stabilisation de tension numériques (120-122), et l'unité d'alimentation électrique en courant continu est configurée pour alimenter les N unités de stabilisation de tension numériques (120-122), N étant un entier positif supérieur à 1.

11. Procédé selon l'une quelconque des revendications 7 à 10, dans lequel l'unité de stabilisation de tension numérique (120-122) et le module de traitement (21, 22, 200) correspondant à l'unité de stabilisation de tension numérique (120-122) sont intégrés dans une puce.
